(19) Europäisches Patentamt
European Patent Office
Office européen des brevets

(11) Numéro de publication: **0 090 710**
**A1**

(12) **DEMANDE DE BREVET EUROPEEN**

(21) Numéro de dépôt: **83400564.7**

(22) Date de dépôt: **18.03.83**

(51) Int. Cl.³: **H 01 M 6/18**, H 01 B 1/12

(30) Priorité: **18.03.82 FR 8204623**
**18.03.82 FR 8204622**

(43) Date de publication de la demande: **05.10.83**
**Bulletin 83/40**

(84) Etats contractants désignés: **AT BE CH DE GB IT LI LU NL SE**

(71) Demandeur: **ANVAR Agence Nationale de Valorisation de la Recherche, 43, rue Caumartin, F-75436 Paris Cedex 09 (FR)**
Demandeur: **SOCIETE NATIONALE ELF AQUITAINE, Tour Aquitaine, F-92400 Courbevoie (FR)**

(72) Inventeur: **Armand, Michel, 10, rue Gabriel Fauré, F-74000 Annecy (FR)**

(74) Mandataire: **Gutmann, Ernest et al, Cabinet Plasseraud 84, rue d'Amsterdam, F-75009 Paris (FR)**

(54) **Electrolytes formés de solutions solides de closoboranes dans un matériau macromoléculaire plastique et générateur électrochimique contenant de tels électrolytes.**

(57) L'invention a pour objet un électrolyte solide polymère comprenant au moins en partie une solution d'un ou plusieurs composés ioniques contenant au moins chacun un cation et un anion, lesdits composés ioniques étant dissous au sein d'un matériau macromoléculaire formé en partie au moins par un ou plusieurs homo- et/ou copolymères dérivés d'un ou plusieurs monomères comprenant un hétéroatome capable de former des liaisons du type donneur-accepteur avec le composé ionique, lesdits composés ioniques étant choisis parmi les closoboranes de formule:

$$M_2 - B_n - X_a - Y_b$$

dans laquelle $\underline{n}$ est un nombre entier égal à 8, 10 ou 12, M peut représenter un métal alcalin, X et Y peuvent représenter des groupes hydrocarbonés, $\underline{a}$ et $\underline{b}$ sont des nombres entiers dont la somme est égale à $\underline{n}$.

Application à la réalisation de générateurs électrochimiques de production de courant.

EP 0 090 710 A1

# ELECTROLYTES FORMES DE SOLUTIONS SOLIDES DE CLOSOBORANES DANS UN MATERIAU MACROMOLECULAIRE PLASTIQUE ET GENERATEUR ELECTROCHIMIQUE CONTENANT DE TELS ELECTROLYTES

L'invention concerne de nouveaux électrolytes formés d'une solution solide d'au moins un composé ionique dans un matériau polymère macromoléculaire.

Le brevet US n° 4 303 748 intitulé "Générateurs électrochimiques de production de courant et nouveaux matériaux pour leur fabrication" décrit un générateur électrochimique ayant au moins un élément de cellule comprenant un électrolyte séparant une électrode positive et une électrode négative l'une de l'autre. Ledit électrolyte est formé au moins en partie d'une solution solide d'un composé ionique au sein d'un matériau macromoléculaire plastique formé d'un ou plusieurs homo- et/ou co- polymères dérivés d'un ou plusieurs monomères comprenant au moins un hétéroatome, par exemple de l'oxygène ou de l'azote, ledit composé ionique comprenant un cation alcalin ou ammonium et un anion dérivé d'un acide fort. L'électrode négative comprend un matériau d'électrode formant une source capable de fournir un cation alcalin ou ammonium à son interface avec l'électrolyte, ledit cation correspondant au matériau du composé ionique dans ledit électrolyte, et l'électrode positive comprend un matériau d'électrode formant un puits à un potentiel inférieur pour le cation correspondant. En d'autres termes, l'électrolyte dans un tel générateur permet le transfert du cation alcalin ou ammonium par conduction ionique, de l'électrode négative à l'électrode positive lorsque la réaction électrochimique résultant dans la production de courant a lieu dans le générateur en question.

En ce qui concerne le composé ionique solubilisé,

la même demande décrit plusieurs combinaisons d'anions et de cations dans lesquelles l'anion présente un rayon ionique supérieur ou égal à 1,81 Å, par exemple I (iode) ou des anions plus complexes dans lesquels la charge négative est distribuée sur plusieurs atomes, par exemple $SCN^-$, $ClO_4^-$, $BF_4^-$, $PF_6^-$, $AsF_6^-$, $CF_3CO_2^-$, $CF_3SO_3^-$.

On a maintenant trouvé qu'un électrolyte comprenant une solution solide d'un closoborane d'un métal alcalin ou d'un ammonium dans un matériau macromoléculaire polymère du type de celui défini dans le brevet US mentionné ci-dessus pouvait avantageusement remplacer les électrolytes décrits dans le brevet US, dans les générateurs électrochimiques du type décrit ci-dessus.

Il est vrai que l'utilisation de closoborane dans des générateurs électrochimiques différents a déjà été suggérée par exemple dans la demande de brevet n° 2 460 625 intitulée "Générateur électrochimique rechargeable comprenant une électrode contenant du closoborane". L'électrolyte envisagé dans ce brevet consiste en une solution liquide d'un closoborane dans un solvant aprotique. Cependant, la présence d'un agent chélatant, et en pratique un cosolvant supplémentaire commun au closoborane et à l'agent chélatant, est nécessaire à la fois pour améliorer les caractéristiques de solubilité desdits closoboranes dans le solvant aprotique et pour favoriser la migration des ions à partir de l'électrode positive jusqu'à l'électrode négative.

Par conséquent, il a été très surprenant de trouver que des closoboranes similaires ou identiques puissent se dissoudre dans des matériaux macromoléculaires du type ci-dessus décrit en l'absence d'agents chélatants et/ou de cosolvants, pour donner des solutions solides capables de contenir de très hautes proportions de tels closoboranes.

Ainsi, le nouvel électrolyte polymère solide de l'invention est formé au moins en partie par une

solution solide de closoborane dissoute au sein d'un matériau macromoléculaire formé au moins en partie par un ou plusieurs homo- et/ou co- polymères dérivés d'une ou plusieurs unités monomères comprenant au moins un hétéroatome, en particulier l'oxygène ou l'azote, capable de former des liaisons donneur-accepteur avec un cation alcalin, ledit closoborane ayant la formule :

$$M_2 - B_n - X_a - Y_b$$

dans laquelle :

M représente un métal alcalin ou ammonium, <u>n</u> est un nombre entier égal à 8, 10 ou 12, X et Y qui sont identiques ou différents l'un de l'autre, représentent chacun un radical choisi dans le groupe constitué par l'hydrogène, les halogènes, CN, un radical hydrocarboné comprenant de 1 à 25, de préférence de 1 à 3 atomes de carbone et <u>a</u> et <u>b</u> sont des nombres entiers dont la somme est égale à <u>n</u>.

Des composés préférés selon l'invention sont ceux dans lesquels X et Y sont identiques et représentent l'hydrogène ou un halogène, en particulier le chlore, et dans lesquels <u>n</u> est égal à 10 ou 12.

De façon avantageuse, le rapport du nombre d'hétéroatomes dans ladite unité monomère ou lesdites unités monomères au nombre d'atomes du métal alcalin ou d'ions ammonium va de 4 à 30, de préférence de 4 à 10, la proportion de closoborane dans ladite solution ne dépassant pas celle dans laquelle la solubilité limite serait atteinte.

Le métal alcalin est de préférence le lithium ou le sodium.

Les matériaux plastiques dans lesquels les closoboranes sont de façon avantageuse mis en solution consistent en homo- et/ou co- polymères dérivés des unités monomères représentées :

- soit par la formule suivante :

$$\left[ CH_2 - \underset{\displaystyle R'}{\underset{|}{CH}} - O \right]$$

dans laquelle R' représente un atome d'hydrogène ou l'un

des groupes Ra, $-CH_2-O-Ra$ $-CH_2-O-Re-Ra-CH_2-N = (CH_3)_2$, avec Ra représentant un radical alcoyle ou cycloalcoyle comprenant notamment de 1 à 16, de préférence de 1 à 4 atomes de carbone, Re représentant un radical polyéther de formule $-(CH_2-CH_2-O)_p-$, p ayant une valeur de 1 à 100, en particulier de 1 à 2 ;

- soit par la formule suivante :

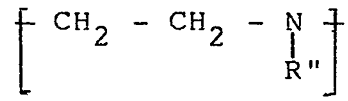

dans laquelle R" représente Ra, -Re-Ra, avec Ra et Re ayant respectivement l'une des significations indiquées ci-dessus, soit par la formule suivante :

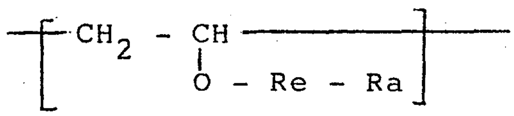

dans laquelle Ra et Re ont respectivement l'une des significations ci-dessus indiquées ;

- soit par la formule suivante :

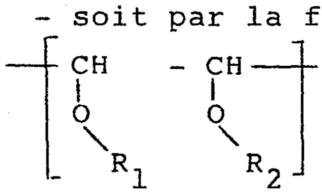

dans laquelle $R_1$ et $R_2$ sont identiques ou différents l'un de l'autre et représentent chacun des groupes Re, Re-Ra comme définis ci-dessus, Re pouvant également représenter un polyéther de formule :

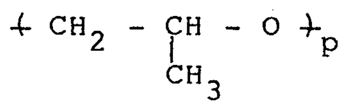

La préparation du composé ionique peut être effectuée selon l'une quelconque des méthodes connues en soi. Par exemple, afin de fabriquer du dodécaborane de sodium de formule $(Na_2B_{12}H_{12})$, on peut utiliser le procédé de synthèse à haute température en partant du borate de sodium $(Na_2B_4O_7)$ comme décrit dans NATURFORSCHUNG 25 B, 1970, p. 6-10.

Les composés dans lesquels X et Y sont différents l'un de l'autre peuvent être obtenus en ayant recours à l'une des méthodes décrites dans le brevet US n° 3 551 120. Par exemple, des closoboranes dans lesquels X représente

de l'hydrogène et Y un radical hydrocarboné, peuvent être obtenus par réaction d'une oléfine sur l'acide $H_2B_{12}H_{12}$, en présence d'un diluant, le sel alcalin pouvant ensuite être obtenu par neutralisation par l'hydroxyde métallique alcalin approprié. De façon similaire, les closoboranes dans lesquels X est un radical CN peuvent être obtenus par réaction de CNCl sur $(H_3O)B_{12}H_{12}$, ladite réaction étant effectuée sous une pression de 16 x $10^5$ Pa, à une température d'environ 25°C.

La préparation de l'électrolyte polymère solide peut être effectuée selon plusieurs méthodes. Le matériau macromoléculaire et le closoborane choisis peuvent tous les deux être dissous dans un solvant commun tel que l'acétonitrile ou le méthanol, le solvant étant ensuite éliminé par évaporation. La proportion relative de closoborane choisie ne doit pas dépasser la solubilité limite de celui-ci dans le matériau macromoléculaire choisi utilisé. En cas de besoin, cette solubilité limite sera déterminée préalablement. Un autre procédé de préparation d'électrolyte ci-dessus consiste à broyer un mélange de matériau macromoléculaire et du composé ionique et à faire fondre le mélange à une température égale ou supérieure à la température de fusion du polymère et à mélanger le mélange à l'état fondu jusqu'à ce qu'on obtienne une dissolution complète.

Les électrolytes solides obtenus sont appropriés pour la production de générateurs électrochimiques de types primaire et secondaire, en particulier les batteries rechargeables.

L'invention concerne aussi les générateurs électrochimiques ainsi formés. Conformément à l'invention, un générateur peut être défini comme comprenant le nouvel électrolyte de l'invention associé avec au moins une électrode négative et au moins une électrode positive séparées l'une de l'autre au moyen du susdit électrolyte l'électrode négative comprenant un matériau d'électrode

formant une source d'espèces capables de fournir un cation correspondant au métal du closoborane dans ledit électrolyte, à l'interface de celui-ci avec l'électrode négative, l'électrode positive formant un puits à un potentiel chimique inférieur pour le cation correspondant.

Dans des modes de réalisation préférés du générateur selon l'invention, l'électrode négative est formée soit de métal alcalin correspondant, soit d'un alliage de celui-ci ou d'un composé intermétallique ou d'insertion contenant ledit métal. Une électrode positive avantageuse comprend un composé ayant un métal de transition, en particulier des composés d'insertion tels que des chalcogénures dans la structure desquels lesdits atomes de métal alcalin sont susceptibles d'être insérés et de diffuser à travers leurs réseaux.

D'autres exemples de macromolécules susceptibles d'être utilisées pour préparer des solutions solides conductrices et de matériaux d'électrodes pour fabriquer les générateurs électrochimiques de cette invention sont décrits dans le brevet US n° 4 303 748. D'autres exemples de closoboranes en tant que tels pour fabriquer l'électrolyte de l'invention sont également identifiés dans les brevets FR n° 76 26677/2 323 238 et 79 27042/2 440 625.

La solution solide ci-dessus est également appropriée pour la préparation d'électrodes, dont le matériau d'électrode est sous la forme de particules, lesdites électrodes formant essentiellement un produit composite d'agglomération homogène du matériau d'électrode et de ladite solution solide. L'électrode composite peut contenir en outre un composant particulaire ayant une conduction électronique. Une telle électrode peut être fabriquée selon les principes décrits dans le brevet US n° 4 303 748 en rapport aux solutions solides contenant des composés ioniques d'un type différent.

L'utilisation d'électrolyte selon l'invention dans les générateurs du type ci-dessus s'est révélée

d'un intérêt particulier, surtout en rapport avec le caractère inerte des closoboranes vis-à-vis de la plupart des matériaux d'électrodes susceptibles d'être utilisés. Cette propriété permet un stockage électrochimique stable du courant électrique et lorsque le générateur consiste en des batteries rechargeables, un grand nombre de cycles charge-décharge. De plus, l'inertie chimique mentionnée ci-dessus confère auxdits générateurs une résistance améliorée au choc thermique.

D'autres caractéristiques et avantages des électrolytes solides polymères selon l'invention apparaîtront dans la description qui suit des modes de réalisation préférés, étant entendu que ces exemples n'ont pas de caractère limitatif.

La figure 1 représente les résultats d'une série d'essais effectuée avec les différents électrolytes des exemples. Les diagrammes du dessin sont représentatifs de la variation de la conductivité électrique (exprimée en $ohm^{-1}.cm^{-1}$ en fonction de l'inverse de la température exprimée en degrés Kelvin).

Dans tous ces exemples, le matériau macromoléculaire utilisé est un poly(oxyde d'éthylène) ayant un poids moléculaire de 900 000. L'électrolyte est obtenu en dissolvant 1 g de poly(oxyde d'éthylène) dans 35 ml d'acétonitrile, puis en ajoutant le closoborane dans des quantités selon les indications données dans les exemples ci-après.

Les solutions ainsi obtenues sont moulées sur un support de polytétrafluoréthylène sur une épaisseur de 5 mm et la couche ainsi obtenue est mise au four à 60°C pendant 3 heures.

Les mesures de conductivité sont effectuées dans chacun des exemples en fonction des températures afin de déterminer la température à laquelle la conductivité est égale à $10^{-5}$ $\Omega^{-1}$ $cm^{-1}$ ($T\sigma 10^{-5}$). Ces mesures sont effectuées sous vide afin d'éliminer toute trace d'humidité et de solvant.

Première série d'exemples

Le closoborane solubilisé dans le poly(oxyde d'éthylène) est $Li_2B_{12}H_{12}$. Les quantités solubilisées sont telles qu'on obtient des rapports atomiques O/Li allant de 4 à 16. Les résultats obtenus sont indiqués dans le tableau ci-après. Le nombre de chaque essai et les valeurs correspondantes du rapport O/Li ainsi que les températures $t\sigma\ 10^{-5}$ sont indiquées dans le tableau.

| Test n° | 1 | 2 | 3 | 4 | 5 | 6 | 7 | 8 |
|---|---|---|---|---|---|---|---|---|
| O/Li | 4 | 5 | 6 | 7 | 8 | 12 | 14 | 16 |
| $t\sigma\ 10^{-5}$ (°C) | 84 | 62 | 45 | 61 | 45 | 49 | 49 | 48 |

Les courbes représentant la variation de conductivité selon l'inverse de la température ne comportent pas de point de transition pour les polymères 1 et 2, ce par quoi est établi leur caractère amorphe.

Deuxième série d'exemples

Des électrolytes polymères solides contenant du closoborane de sodium de formule $Na_2B_{12}H_{12}$ caractérisés par des rapports O/Na allant de 6 à 8, sont soumis à des essais dans des conditions similaires.

On obtient les résultats suivants :

| Test n° | 9 | 10 |
|---|---|---|
| O/Na | 6 | 8 |
| $t\sigma\ 10^{-5}$ | 100 | 73 |

Troisième série d'exemples

Dans cette série, le closoborane qui est soumis à l'essai à la formule suivante $Li_2B_{12}Cl_{12}$. Les rapports O/Li dans les solutions solides obtenues vont de 6 à 14.

Les résultats obtenus sont rassemblés dans le tableau suivant. Les températures correspondant à une conductivité de $10^{-4}$ $\Omega^{-1}$ $cm^{-1}$ sont aussi indiquées dans le tableau suivant :

| Test n° | 11 | 12 | 13 | 14 | 15 |
|---|---|---|---|---|---|
| O/Li | 6 | 8 | 10 | 12 | 14 |
| $t_\sigma$ $10^{-5}$ (°C) | 99 | 45 | 53 | 43 | 46 |
| $t_\sigma$ $10^{-4}$ (°C) | 129 | 80 | 76 | 77 | 68 |

Les courbes représentatives des variations de la conductivité en fonction de l'inverse de la température sont également indiquées dans la figure 1. On remarque qu'à partir de l'essai 12, les courbes de conductivité montrent que la solution solide obtenue présente une structure à dominante cristalline sur le domaine de températures utilisé.

Les résultats en fonction de la température à laquelle la conductivité σ vaut $10^{-5}$ $\Omega^{-1}$ $cm^{-1}$ montrent que ces électrolytes sont appropriés pour la production de générateurs électrochimiques des types primaire et secondaire.

De façon semblable, on a trouvé que les décaboranes de formule générale $M_2B_{10}X_{10}$ dans lesquels M et X ont les significations générales indiquées ci-dessus sont compatibles avec l'utilisation ci-dessus, dans la mesure où les solutions solides obtenues présentent une température $\sigma 10^{-5}$ inférieure à 100°C.

Une cellule représentative d'un générateur électrochimique de type secondaire est fabriquée dans les conditions suivantes.

L'électrolyte de cette cellule est formé de la solution solide utilisée dans l'essai n° 5 (première série d'exemples). On l'associe avec une électrode positive formée d'un agglomérat essentiellement homogène de

la même solution solide avec 60 % (volume/volume) de $TiS_2$ particulaire formant le matériau actif initial de l'électrode. L'électrode négative consiste en un alliage de lithium et d'aluminium contenant 60 % de lithium (pourcentage atomique). La cellule ainsi constituée est opérationnelle pour produire du courant électrique et fournit les résultats suivants :

voltage en circuit ouvert : 2,3 V à 100°C

courant de décharge : >1 mA/cm2.

De façon similaire, une cellule primaire est formée en utilisant une solution solide de $Li_2B_{12}H_{12}$ dans un copolymère d'oxyde d'éthylène (70 % volume/volume) et d'éther de méthyle et de glycidyle (30 % volume/volume) de formule :

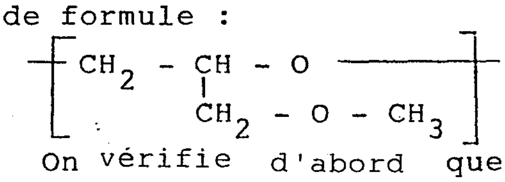

On vérifie d'abord que la conductivité de la solution solide est supérieure à $10^{-5}\ \Omega^{-1}\ cm^{-1}$ à 70°C.

Les électrodes associées à cet électrolyte dans ladite cellule sont une électrode négative constituée de lithium et une électrode positive constituée initialement de disulfure de fer ($FeS_2$). On obtient les résultats suivants :

voltage en circuit ouvert : 1,9 V à 25°C

courant de décharge : > 1 A/cm2.

L'invention concerne aussi le nouvel électrolyte formé d'une solution solide d'un composé ionique dans un matériau polymère de la classe constituée des homopolymères dérivés du motif monomère défini ci-après ou des copolymères dérivés du motif monomère défini ci-dessus et d'un autre motif monomère, dans lequel le premier motif monomère mentionné est représenté par la formule suivante :

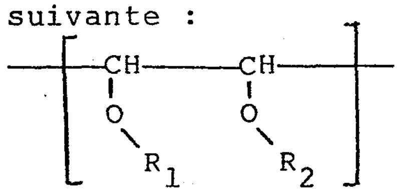

dans laquelle $R_1$ et $R_2$ ont les significations indiquées ci-dessus. Dans le cas de copolymères, l'autre motif monomère auquel on a fait ci-dessus référence peut être celui de ceux qui ont déjà été identifiés dans la présente description ou dans le brevet US n° 4 303 748.

En fait, les solutions solides ci-dessus indiquées contenant les monopolymères ou les copolymères de la classe ci-dessus indiquée sont nouveaux et inventifs per se quel que soit le composé ionique dissous en leur sein. Le composé ionique solubilisé peut être l'un quelconque de ceux qui ont été désignés dans la présente description ou dans le brevet US ci-dessus indiqué, en plus des closoboranes plus spécifiquement envisagés ici.

Les homopolymères ou copolymères de cette invention sont de préférence à l'état amorphe. Leur poids moléculaire est supérieur à 10 000, de préférence supérieur à 100 000.

Ces solutions solides peuvent être préparées selon les mêmes techniques que celles qui ont été définies précédemment dans cette demande ou dans le brevet US mentionné ci-dessus vis-à-vis d'autres homo- ou co- polymères. Les électrolytes comprenant ladite solution solide ou constitués par ladite solution solide peuvent être associés avec des électrodes positives et négatives semblables à celles envisagées ici. En conséquence, l'invention concerne également les batteries ainsi formées.

En plus, ces solutions solides sont également susceptibles d'être utilisées pour produire des électrodes dont le matériau de l'électrode est sous la forme de particules, lesdites électrodes formant essentiellement un produit composite d'agglomération homogène de son matériau d'électrode et de ladite solution solide.

D'autres caractéristiques et avantages desdites solutions sont exemplifiés ci-après.

<u>Quatrième série d'exemples</u>

On a réalisé un électrolyte solide polymère par

mise en solution d'iodure de lithium dans un polydiméthoxyéthylène, de masse moléculaire supérieure à 100 000.

Pour cela, on a préparé le polydiméthoxyéthylène par polymérisation du cis 1-2 diméthoxyéthylène dans du toluène, à une température de -78°C. La réaction de polymérisation a été initiée par un complexe de trifluorure de bore et de diméthyléther. Après isolement du polymère, on en a effectué une solution dans de l'acétonitrile en présence d'iodure de lithium, dans des proportions telles que l'on avait un rapport d'atomes d'oxygène et d'atomes de lithium O/Li égal à 8.

Après évaporation du solvant sur une plaque de polytétrafluoroéthylène, on a obtenu un film d'électrolyte solide pour lequel on a déterminé que la conductivité était supérieure à $10^{-5}$ $\Omega^{-1}$ $cm^{-1}$ pour une température de 80°C.

Cinquième série d'exemples

On a réalisé un électrolyte par mise en solution, dans le même polydiméthoxyéthylène que celui de la quatrième série d'exemples, de perchlorate de sodium $Na\,ClO_4$, avec le rapport O/Na = 10. On a vérifié de même que la conductivité était supérieure à $10^{-5}$ $\Omega^{-1}$ $cm^{-1}$ à 80°C.

Sixième série d'exemples

On a repris les exemples précédents en effectuant une solution solide de trifluorométhane sulfonate de potassium ($CF_3SO_3K$) dans du polydiméthoxyéthylène de masse moléculaire supérieure à 100 000. Le rapport O/K était égal à 12. On a vérifié que la conductivité était supérieure à $10^{-5}$ $\Omega^{-1}$ $cm^{-1}$ pour 80°C.

Septième série d'exemples

On a réalisé un générateur électrochimique de production de courant, du type secondaire, en associant le film d'électrolyte solide, obtenu à la série d'exemples n° 4, à deux électrodes.

L'électrode négative était constituée par un

alliage de lithium et d'aluminium contenant 50 % at. de lithium et d'électrode positive par un composite de $TiS_2$ et d'électrolyte solide, (60 % d'électrolyte solide en volume).

Après une première charge, on a mesuré la tension en circuit ouvert et le courant de décharge pour la température de 80°C. Les résultats obtenus sont les suivants :

E circuit ouvert : 2,3 V

i décharge : > 0,1 mA/cm2

Les exemples précédents ne sont évidemment pas limitatifs de l'invention. Il faut comprendre que toutes les variantes qui font appel aux mêmes principes ou à n'importe quel composant compris à l'intérieur de n'importe quelle classe de composés ou de matériaux ci-dessus décrits, ainsi que ceux qui dérivent des susdites formules, ayant des propriétés similaires, sont considérées comme des équivalents tombant dans la portée des revendications jointes.

REVENDICATIONS

1. Electrolyte polymère solide comprenant au moins en partie une solution solide d'un ou plusieurs composés ioniques comprenant chacun au moins un cation et un anion, lesdits composés ioniques étant dissous au sein d'un matériau macromoléculaire plastique formé au moins en partie par un ou plusieurs homo- et/ou co- polymères dérivés d'un ou plusieurs monomères comprenant un hétéroatome capable de former des liaisons du type donneur-accepteur avec le cation du composé ionique, dans lequel lesdits composés ioniques sont choisis parmi les closoboranes de formule :

$$M_2B_nX_aY_b$$

dans laquelle n est un nombre entier égal à 8, 10 ou 12, M est un métal alcalin ou l'ion ammonium, X et Y, qui sont identiques ou différents l'un de l'autre, représentent chacun un groupe choisi parmi l'hydrogène, les halogènes, CN et les groupes hydrocarbonés, a et b sont des nombres entiers dont la somme est égale à n.

2. Electrolyte solide selon la revendication 1, dans lequel soit X soit Y, ou les deux, représentent des groupes hydrocarbonés et dans lequel lesdits groupes hydrocarbonés comprennent de 1 à 3 atomes de carbone.

3. Electrolyte solide selon la revendication 1, dans lequel X et Y sont identiques et représentent l'hydrogène ou un halogène.

4. Electrolyte solide selon la revendication 3, dans lequel X et Y représentent tous les deux le chlore.

5. Electrolyte solide selon l'une quelconque des revendications 1 à 4, dans lequel n vaut soit 10 soit 12.

6. Electrolyte solide selon l'une quelconque des revendications 1 à 5, dans lequel le rapport du nombre d'hétéroatomes desdits homo- et/ou co- polymères au nombre d'atomes de métal alcalin ou d'ions ammonium va de 4 à 30.

7. Electrolyte solide selon la revendication 6, dans lequel ledit rapport va de 4 à 16.

8. Electrolyte solide selon l'une quelconque des revendications 1 à 7, dans lequel le matériau macromoléculaire est un poly(oxyde d'éthylène).

9. Electrolyte solide selon l'une quelconque des revendications 1 à 8, dans lequel le matériau macromoléculaire est un copolymère d'éthylène oxyde et d'éther de méthyle et de glycidyle.

10. Générateur électrochimique de production de courant électrique comprenant au moins une électrode négative et au moins une électrode positive séparées l'une de l'autre au moyen d'électrolyte solide, l'électrode négative comprenant un matériau d'électrode formant une source d'espèces ayant un potentiel chimique supérieur capable de fournir un cation alcalin ou ammonium à son interface avec l'électrolyte et l'électrode positive formant un puits à un potentiel chimique inférieur pour l'espèce non ionisée correspondant au susdit cation alcalin dans lequel l'électrolyte qui permet le transfert de ce cation alcalin par conduction ionique à partir de l'électrode négative jusqu'à l'électrode positive est formé au moins en partie d'une solution solide d'au moins un closoborane dans un matériau macromoléculaire plastique, ledit closoborane étant choisi parmi le groupe de closoboranes de formule :

$$M_2B_nX_aY_b$$

dans laquelle n est un nombre entier égal à 8, 10 ou 12, M est un métal alcalin ou l'ion ammonium, X et Y, qui sont identiques ou différents l'un de l'autre, représentent chacun un groupe choisi parmi l'hydrogène, les halogènes, CN et les groupes hydrocarbonés, a et b sont des nombres entiers dont la somme est égale à n et ledit matériau macromoléculaire est formé au moins en partie par un ou plusieurs monomères comprenant un hétéroatome capable de former des liaisons du type donneur-accepteur avec le cation $M^+$ des susdits closoboranes.

11. Générateur selon la revendication 10, dans lequel l'électrode positive est formée au moins en partie

par un composé à base de disulfure de titane.

12. Générateur selon la revendication 10, dans lequel l'électrode positive est formée au moins en partie par un composé à base de disulfure de fer.

13. Générateur selon la revendication 10, dans lequel l'électrode positive est formée par un métal alcalin ou par un alliage contenant ledit métal alcalin ou par un composé intermétallique ou un composé d'insertion contenant ledit métal alcalin, dans lequel ledit métal alcalin est du sodium ou du lithium.

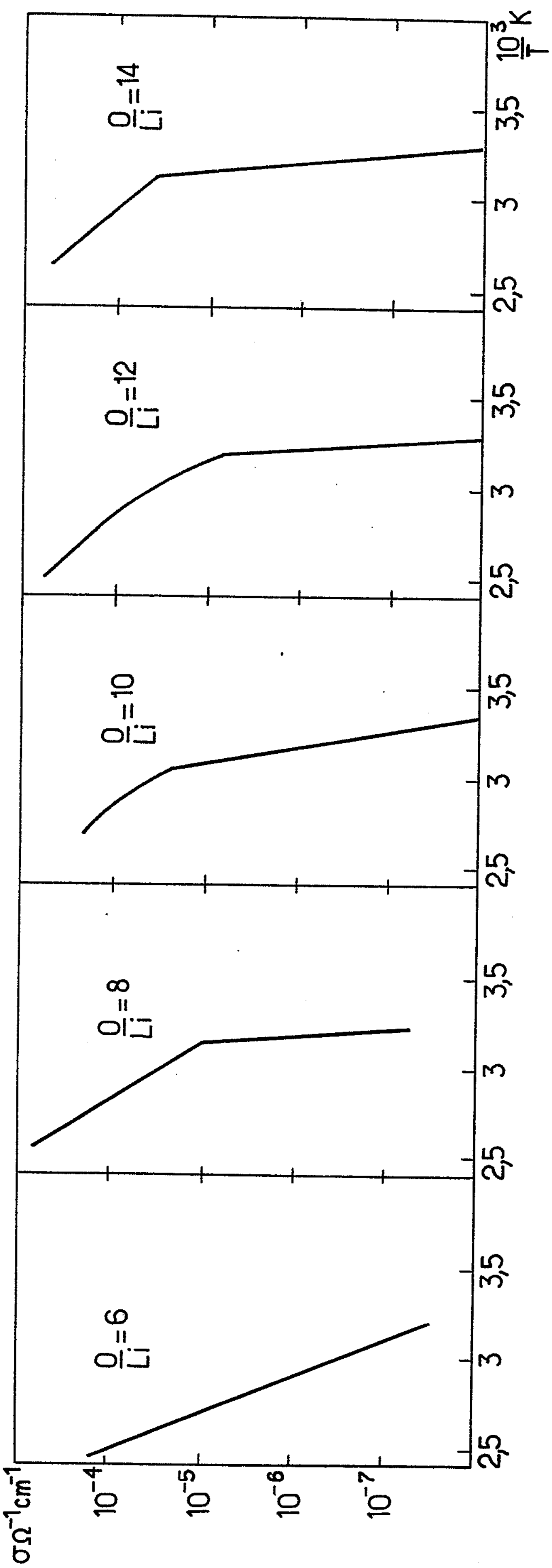
POE $Li_2B_{12}CL_{12}$
$\frac{O}{Li}=6$
$\frac{O}{Li}=8$
$\frac{O}{Li}=10$
$\frac{O}{Li}=12$
$\frac{O}{Li}=14$
$\sigma \Omega^{-1}cm^{-1}$
$10^{-4}$
$10^{-5}$
$10^{-6}$
$10^{-7}$
2,5
3
3,5
$\frac{10^3}{T}$ K

0090710

Numéro de la demande

Office européen des brevets

# RAPPORT DE RECHERCHE EUROPEENNE

EP 83 40 0564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| E | EP-A-0 078 505 (C.G.E.)<br>* Page 2, lignes 7-36; page 3, lignes 1-14, 28-35; page 4; page 5, lignes 26-32 *<br>--- | 1,3-5, 8,10-13 | H 01 M 6/18<br>H 01 B 1/12 |
| A | SOLID STATE IONICS. vol. 5, octobre 1981, pages 83-88, Amsterdam, NL.<br>D.F. SHRIVER et al.: "Structure and ion transport in polymer-salt complexes"<br>--- | | |
| D,A | FR-A-2 440 625 (EXXON RESEARCH)<br>--- | | |
| D,A | EP-A-0 013 199 (ANVAR)<br>--- | | DOMAINES TECHNIQUES RECHERCHES (Int. Cl. 3) |
| D,A | FR-A-2 323 238 (P.R. MALLORY)<br>--- | | H 01 M 6/18<br>H 01 B 1/12 |
| A | EP-A-0 037 776 (ETAT FRANCAIS)<br>----- | | |

Le présent rapport de recherche a été établi pour toutes les revendications

| Lieu de la recherche | Date d'achèvement de la recherche | Examinateur |
|---|---|---|
| LA HAYE | 27-06-1983 | DE VOS L.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82